# EUROPÄISCHE PATENTSCHRIFT

(11) **EP 0 418 463 B1**
(45) Veröffentlichungstag und Bekanntmachung des Hinweises auf die Patenterteilung: **21.09.1994**
(21) Anmeldenummer: 90107804.8
(22) Anmeldetag: 25.04.1990
(51) Int. Cl.: C12C 1/18

(54) **Verfahren zur Herstellung eines Malzproduktes für Lebensmittel, insbesondere für die Bierherstellung und nach diesem Verfahren hergestelltes Malzprodukt**
Process for preparing a malt product for foodstuff, more particularly for preparing beer and malt and a product produced by this process
Procédé pour la préparation d'un produit à base de malt pour l'alimentation, plus particulièrement pour la préparation de la bière et produit à base de malt préparé selon ce procédé

(30) Priorität: 26.08.1989 DE 3928274
(43) Veröffentlichungstag der Anmeldung: 27.03.1991
(73) Patentinhaber: Friedrich Weissheimer Malzfabrik, D-56626 Andernach (DE)
(72) Erfinder: Sarx, Hans Georg, D-5470 Andernach (DE)
(74) Vertreter: Bauer, Wulf, Dr.

(56) Entgegenhaltungen:
- EP-A- 0 140 146
- DE-A- 3 211 332
- DE-A- 3 212 390
- US-A- 1 410 973

## Beschreibung

Die Erfindung bezieht sich auf ein Verfahren zur Herstellung eines Malzproduktes für Lebensmittel, insbesondere für die Bierherstellung, das Aroma und/oder Farbe des Lebensmittels, z. B. des Bieres beeinflußt, sowie ein nach diesem Verfahren hergestelltes Malzprodukt.

Es ist bekannt, im Brauprozeß Spezialmalze wie Karamelmalz oder Röstmalz einzusetzen, durch die dem Bier wahlweise eine Geschmacksstabilisierung, eine Verbesserung der Vollmundigkeit oder eine Zufärbung mitgegeben werden kann. Nachteilig ist jedoch, daß diese Produkte den gesamten Brauprozeß durchlaufen und ihre für die eigentliche, gewollte Aufgabe unnützen Bestandteile wie beispielsweise die Spelze den Brauprozeß belasten. Weiterhin müssen Silos für die speziellen Malze vorgesehen sein. Schließlich wird eine gezielte Einstellung der gewünschten Farbe bzw. des gewünschten Aromas auf diese Weise nicht immer erreicht.

Für die Farbeinstellung nimmt man im allgemeinen Zuckercouleur, hier ergeben sich jedoch zunehmend Probleme mit der Nahrungsmittelgesetzgebung beispielsweise im Bereich der Bundesrepublik Deutschland und der Europäischen Gemeinschaft.

Weiterhin ist es allgemein bekannt, Malzextrakte Lebensmitteln zuzusetzen, um deren Arome und/oder Farbe zu beeinflussen, beispielsweise für Bonbons, Plätzchen, Instantgetränke auf Malzbasis usw. Die Herstellung von Malzextrakt ist jedoch teuer und energieaufwendig. Im allgemeinen werden daher künstliche Aroma- oder Färbemittel für Lebensmittel eingesetzt, diese müssen jedoch - im Gegensatz zu dem natürlichen Produkt Malzextrakt - deklariert werden.

Hiervon ausgehend liegt der Erfindung die Aufgabe zugrunde, ein Verfahren zur Herstellung eines Spezialmalzproduktes bzw. ein nach diesem Verfahren hergestelltes Spezialmalzprodukt anzugeben, das ballastfrei und nahrungsmittelrechtlich unbedenklich dem Lebensmittel, insbesondere dem Bier während seines Herstellungsverfahrens zugegeben werden kann, den Herstellungsprozeß, insbesondere den Brauprozeß möglichst wenig belastet, in standardisierten Eigenschaften vorliegt und hohe Löslichkeit aufweist.

Verfahrensmäßig gelöst wird diese Aufgabe durch ein Verfahren zur Herstellung eines Malzproduktes für Lebensmittel, insbesondere für die Bierherstellung, das Aroma und Farbe des Lebensmittels, insbesondere des Biers beeinflußt, bei dem
a) Karamelmalz und separat hiervon Röstmalz hergestellt werden,
b) die Malze auf einen Wassergehalt zwischen 8 und 15 Gewichtsprozent eingestellt werden,
c) eine Entspelzung ohne Brechen des Mehlkörpers durchgeführt wird,
d) der entspelzte Mehlkörper einem Pulverisierungsprozeß unterworfen wird,
e) Karamelmalz und Röstmalz miteinander gemischt werden, wobei die Mischung mindestens 10 Gewichtsprozent Karamelmalz enthält und
f) das Mischprodukt granuliert wird.

Weiterhin wird die Aufgabe gelöst durch ein Malzprodukt, das nach diesem Verfahren hergestellt ist.

Das erfindungsgemäße Malzprodukt wird auf natürliche Weise aus vermälztem, ausgesuchtem Braugetreide hergestellt. Zusatzstoffe werden nicht eingesetzt und sind für das Endprodukt auch nicht notwendig. Das Malzprodukt entspricht insofern den strengen Anforderungen der Lebensmittelgesetzgebung in der Bundesrepublik und in der Europäischen Gemeinschaft.

Durch das Malzprodukt läßt sich gezielt die Farbe, der Geschmack und/oder die Geschmacksstabilität eines Lebensmittels, insbesondere eines Bieres ohne Änderung des Produktionsprozesses einstellen.

Beispielsweise bei Bier wird die geschmacksstabilisierende Wirkung erreicht durch einen hohen Gehalt an Melanoidinen, die nach wissenschaftlicher Erkenntnis das Bier gegen geschmacksverändernde Einflüsse durch Licht und Sauerstoff abpuffern. Eine Verbesserung der Vollmundigkeit, die mit dem Malzprodukt nach der Erfindung erreicht wird, beruht auf Aromakomponenten, die während der Herstellung des Malzproduktes entstehen.

Die farbgebende Wirkung des erfindungsgemäßen Malzproduktes kann in Farbtiefen zwischen beispielsweise 30 und 1000 EBC-Einheiten angeboten werden, beispielsweise werden einsatzfertige Malzprodukte der erfindungsgemäßen Art in den Farbtiefen 50, 100, 500 und 1000 EBC-Einheiten hergestellt.

EBC-Einheiten sind von der European Brewery Convention festgesetzte standardisierte Normen für die Analytik.

Das erfindungsgemäße Malzprodukt ist im wesentlichen ein Extrakt derjenigen Bestandteile der Malze, die die gewünschten geschmacksstabilisierenden, aromabeeinflussenden und färbenden Eigenschaften haben. Aufgrund der Abtrennung der Spelze wird der Brauprozeß bei der Bierherstellung selbst nicht belastet oder durch diese Ballaststoffe negativ beeinflußt. Im Gegensatz zu den bisher im Brauprozeß angewandten Spezialmalzen kann daß erfindungsgemäße Malzprodukt dank seiner hohen Löslichkeit in einer späteren Phase des Sudprozesses eingesetzt werden. Die hohe Löslichkeit wird erreicht, indem nach Entfernen der Spelze die Spezialmalze pulverisiert werden. Die Granulierung verbessert die Handhabung, insbesondere ermöglicht sie eine staubfreie Handhabung des Produktes. Gegenüber Malzextrakten, wie sie für Lebensmittel zur Geschmacksbeeinflussung oder Färbung nach dem Stand der Technik eingesetzt werden, ist das erfindungsgemäße Malzprodukt wesentlich preisgünstiger herzustellen, ohne daß qualitätsmäßig eine Minderung in Kauf genommen werden muß. Beim Einsatz für Lebensmittel, beipsielsweise Backwaren, kann unter Umständen der Granulierungsschritt, also das Merkmal f), entfallen.

Im folgenden wird das erfindungsgemäße Malzprodukt im wesentlichen im Hinblick auf seinen Einsatz bei der Bierherstellung beschrieben:

Die Auswahl des jeweiligen Mischungsverhältnisses zwischen pulverförmigem Karamelmalz und pulverförmigem Röstmalz (entsprechend Schritt e)) ist davon abhängig, welche Eigenschaften durch das Malzprodukt dem Bier mitgeteilt werden sollen. Zur Verbesserung der Geschmacksstabilität werden hellere Malzprodukte der erfindungsgemäßen Art eingesetzt, also insbesondere mit einer Farbtiefe im unteren Bereich der oben genannten Skala. Zur Korrektur der Bierfarbe werden dunklere Typen des erfindungsgemäßen Malzproduktes eingesetzt, also Mischungen mit hohen Farbtiefen, anders ausgedrückt am oberen Ende der oben genannten Skala in EBC-Einheiten. In vielen Fällen ist sowohl eine leichte Farbkorrektur als auch eine geschmacksstabiliserende Wirkung erwünscht, in diesem Fall kann eine mittlere Farbtiefe verwendet werden.

Das erfindungsgemäße Malzprodukt läßt sich durch kontrollierte Herstellung standardisieren, dies wiederum ermöglicht eine genaue Vorgabe der gewünschten Bierfarbe aufgrund einer vorgegebenen Dosage des erfindungsgemäßen Malzproduktes. So kann man beispielsweise für die Erhöhung der Farbe von 500 hl Würze um 1 EBC-Einheit 4 kg des erfindungsgemäßen Malzproduktes mit 1000 EBC-Einheiten oder 6,25 kg mit 500 EBC-Einheiten einsetzen.

Das erfindungsgemäße Malzprodukt ist über längere Zeitspannen und ohne Einbuße an Qualität lagerfähig, für die Verpackung haben sich Kunststoffsäcke oder Kartons als günstig erwiesen.

Bei Einsatz des erfindungsgemäßen Malzproduktes in der Brauindustrie ergeben sich im Vergleich zu den bisher angebotenen Spezialmalzen und Färbeprodukten mehrere Vorteile:
- Eine Vorratshaltung in Silos entfällt, eine Schrotung muß nicht durchgeführt werden, ebenfalls entfällt ein Maischprozeß, die Dosierung ist wesentlich vereinfacht.
- Man erzielt eine hohe Extraktausbeute, da Spelzen fehlen und die Löslichkeit des erfindungsgemäßen Malzproduktes ausgezeichnet ist.
- Die Bierqualität läßt sich bei Einsatz des erfindungsgemäßen Malzproduktes sorgfältiger und gezielter einstellen.
- Praxisversuche haben gezeigt, daß das erfindungsgemäße Malzprodukt zu einer Verbesserung des Gärverlaufes beiträgt.

Im folgenden wird die Produktion des erfindungsgemäßen Malzproduktes beschrieben:
Auf ansich bekanntem, klassischem Wege werden Karamelmalz und separat hiervon Röstmalz mit verschiedenen Farbtiefen einzeln hergestellt. Die Farbtiefen von Karamelmalz reichen bekanntlich von 10 bis 50 und die von Röstmalz von 1000 bis 1400 EBC-Einheiten.

In einem nächsten Schritt werden die Wassergehalte der Malze je nach Typ auf ein Optimum eingestellt, das erfahrungsgemäß zwischen 8 und 15 Gewichtsprozent Wasser liegt. Hierdurch kann die anschließende Entspelzung durchgeführt werden, ohne daß der Mehlkörper während des Entspelzungsprozesses bricht. Für den Entspelzungsvorgang hat sich eine Reisschälmaschine als besonders günstig erwiesen.

Während der Entspelzung werden die wasserunlöslichen Spelzen und äußeren Kornschichten bis zu ca. 90 % entfernt. Dies führt zu einer Gewichtsabnahme von etwa 15 % der eingesetzten Malzmasse. Die Spelzen werden als Futtermittel verwendet.

Der entspelzte Mehlkörper wird anschließend einem Pulverisierungsprozeß unterworfen, die Korngröße soll unter 0,3 mm liegen. Als besonders günstig haben sich für den Mahlvorgang Feinprallmühlen oder Luftstrahlvermahlung erwiesen.

Im Anschluß an die Pulverisierung erfolgt ein Mischvorgang, in dem unterschiedliche Prozentsätze des pulverförmigen Karamelmalz mit dem pulverförmigen Röstmalz gemischt werden. Ein typisches Produkt der erfindungsgemäßen Art mit 1000 EBC-Einheiten enthält 90 % Röstmalz und 10 % Karamelmalz.

Abschließend erfolgt zur besseren Handhabung des erfindungsgemäßen Malzproduktes eine Granulierung des Pulvers, hierzu wird vorzugsweise das Spaltkreiselverfahren eingesetzt. Voraussetzung für die Bindung und Granulierung des Röstmalzproduktes ist ein Mindestanteil von Karamelmalzpulver von 10 Gewichtsprozenten, falls nicht Zucker als Zusatz zugegeben wird. Dadurch kann die bei Röstmalz mit Spelze zu erreichende Farbtiefe von etwa 1300 EBC-Einheiten nicht voll erreicht werden, es sei denn, man setzt fremde Stoffe wie Zucker etc. hinzu.

Das fertige Malzprodukt wird, nach Typen getrennt, mit Kunststoff und Kartons lagerfähig in handhabbaren Einheiten von 1 bis 20 kg verpackt.

Das erfindungsgemäße Malzprodukt hat typischerweise einen Wassergehalt von etwa 6 bis 14 Gewichtsprozenten, der Eiweißgehalt liegt typischerweise zwischen 9 und 12 Gewichtsprozenten, der Gesamtgehalt an Zucker (Fructose, Glucose, Saccharose und Maltose) liegt zwischen 20 und 40 Gewichtsprozenten. Die konkreten Gewichtsanteile dieser Inhaltsstoffe sind auch abhängig von der Produktqualität, so findet man beispielsweise bei Produkten im unteren Bereich der angegebenen Skala der EBC-Einheiten geringere Eiweißgehalte als bei Produkten im Bereich von 1000 EBC-Einheiten.

Die Feinheit des erfindungsgemäßen Malzproduktes läßt sich an folgender Wertetabelle einer Sieblinie erkennen.

| Partikelgrößen: Häufigkeit der Partikel kleiner als ... Mikrometer, in Gewichtsprozenten: | |
|---|---|
| 1270 | 98,1 |
| 1010 | 96,5 |
| 547 | 80,8 |
| 253 | 51,8 |
| 152 | 50 |

## Patentansprüche

1. Verfahren zur Herstellung eines Malzproduktes für Lebensmittel, insbesondere für die Bierherstellung, das Aroma und Farbe des Lebensmittels, insbesondere des Bieres beeinflußt, bei dem
a) Karamelmalz und separat hiervon Röstmalz hergestellt werden,
b) die Malze auf einen Wassergehalt zwischen 8 und 15 Gewichtsprozent eingestellt werden,
c) eine Entspelzung ohne Brechen des Mehlkörpers durchgeführt wird,
d) der entspelzte Mehlkörper einem Pulverisierungsprozeß unterworfen wird,
e) Karamelmalz und Röstmalz miteinander mischt werden, wobei die Mischung mindestens 10 Gewichtsprozent Karamelmalz enthält und
f) das Mischprodukt granuliert wird.

2. Verfahren nach Anspruch 1, dadurch gekennzeichnet, daß bei der Entspelzung die wasserunlöslichen Spelzen und äußeren Kornschichten zu ca. 90 % entfernt werden und die eingesetzte Malzmasse eine Gewichtsabnahme von etwa 15 % erfährt.

3. Verfahren nach Anspruch 1, dadurch gekennzeichnet, daß die Entspelzung in einer Reisschälmaschine durchgeführt wird.

4. Verfahren nach Anspruch 1, dadurch gekennzeichnet, daß die Pulverisierung nach Schritt d) in einer Feinprallmühle oder bei Luftstrahlvermahlung durchgeführt wird.

5. Verfahren nach Anspruch 1, dadurch gekennzeichnet, daß die Korngröße nach der Pulverisierung kleiner gleich 300 Mikrometer beträgt.

6. Verfahren nach Anspruch 1, dadurch gekennzeichnet, daß die Granulierung im Spaltkreiselverfahren erfolgt.

7. Malzprodukt für die Einstellung von Aroma und/oder Farbe von Lebensmitteln, insbesondere für die Bierherstellung, dadurch gekennzeichnet, daß es nach einem der Verfahren der Ansprüche 1 bis 6 hergestellt ist.

8. Verwendung eines Malzproduktes nach Anspruch 7 für die Bierherstellung.

9. Verwendung eines Malzproduktes nach Anspruch 7 für Lebensmittel (ausgenommen die Bierherstellung), insbesondere Bonbons, Gebäck, Instantgetränke.

## Claims

1. A method for production of a malt product for food, in particular for brewing, contributing to aroma and colour of food, in particular of beer, in which:
a) crystal malt and roasted malt are produced separately,
b) moisture content of both malts is adjusted to a value between 8 and 15 percent in weight,
c) dehusking is performed without crushing the endosperm,
d) after dehusking, the endosperm is subjected to a pulverising process,
e) crystal malt and roasted malt are mixed, the mixture containing at least 10 percent crystal malt in weight, and
f) the mixture is granulated.

2. Method according to clam 1, further characterised in that approx. 90% of the insoluble husks and outer grain layers is eliminated by dehusking and that the malt mass used is reduced in weight by about 15%.

3. Method according to Claim 1, further characterised in that dehusking is performed in a rice husker.

4. Method according to Claim 1, further characterised in that in step d) pulverisation is performed in an impact mill or by air jet grinding.

5. Method according to Claim 1, further characterised in that after pulverisation particle size is 300 micrometer or less.

6. Method according to Claim 1, further characterised in that granulation occurs using the gyratory splitting process.

7. Malt product for adjusting food aroma and/or colour, in particular for brewing, characterised in that the product is produced by the method according to Claims 1 to 6.

8. Use of a malt product according to Claim 7 for brewing.

9. Use of a malt product according to Claim 7 for food (except in brewing), in particular for sweets, pastry and instant beverages.

## Revendications

1. Procédé pour la fabrication d'un produit à base de malt pour les produits alimentaires en particulier pour la production de bière influençant l'arôme et la couleur du produit alimentaire en particulier de la bière, selon lequel
a) le malt caramel et le malt torréfié sont séparément produits,
b) les malts sont réglés à une teneur en eau de 8 à 15 pour cent du poids,
c) l'enveloppe est retirée sans cassage de l'amande farineuse,
d) l'amande farineuse sans enveloppe est soumise à un processus de pulvérisation,
e) le malt caramel et le malt torréfié sont mélangés, le mélange contenant au moins 10 pour cent du poids de malt caramel et,
f) il est procédé à la granulation du produit mélangé.

2. Procédé selon la revendication 1 caractérisé en ce que, lors de l'enlèvement de l'enveloppe, environ 90% des enveloppes insolubles dans l'eau et couches extérieures du grain sont retirées et que la masse de malt utilisée accuse une perte de poids d'environ 15%.

3. Procédé selon la revendication 1 caractérisé en ce que l'enlèvement de l'enveloppe s'effectue dans une décortiqueuse de riz.

4. Procédé selon la revendication 1 caractérisé en ce que la pulvérisation selon la démarche d) s'effectue dans un broyeur fin à impact ou par mouture à jet d'air.

5. Procédé selon la revendication 1 caractérisé en ce que la grosseur des grains après la pulvérisation est inférieure à 300 micromètres.

6. Procédé selon la revendication 1 caractérisé en ce que la granulation s'effectue par craquage centrifuge.

7. Produit à base de malt pour le réglage de l'arôme et/ou de la couleur de produits alimentaires, en particulier pour la production de bière, caractérisé en ce qu'il est fabriqué selon l'un des procédés des revendications 1 à 6.

8. Utilisation d'un produit à base de malt selon la revendication 7 pour la production de bière.

9. Utilisation d'un produit à base de malt selon la revendication 7 pour les produits alimentaires (à l'exception de la production de bière), en particulier des bonbons, des pâtisseries, des boissons instantanées.
